# EUROPEAN PATENT APPLICATION

(11) **EP 2 733 637 A1**
(43) Date of publication of application: **21.05.2014**
(21) Application number: 12306408.1
(22) Date of filing: 14.11.2012
(51) Int. Cl.: G06F 21/55

(54) **Method to counter side channel attack on sensitive data**

(71) Applicant: Gemalto SA, 92190 Meudon (FR)
(72) Inventor: LI, Xun, 13705 LA CIOTAT (FR)

(57) **Abstract**

The invention relates to a method to manage physical volatile memory storing sensitive data relative to a cryptography algorithm process, said method comprising an initial step (E0) of defining a plurality of logical sub-buffers (Bi) ordered in a logical layout (LLyt) intended to include in physical volatile memory sensitive data relative to the cryptography algorithm process, and said method comprising, before each run of the cryptography algorithm process, the following steps:
- constructing (E1) a random permutation table (PT(Bi)) for the sub-buffers (Bi),
- recording (E3), in an address table (AT(Bi)), the physical address of each sub-buffer (Bi) obtained after permutation,

said method then implying the running of the sensitive process by accessing the sub-buffers' contents as ordered in a logical layout (LLyt) using the address table (AT(Bi)) to call the corresponding physical addresses, then each time of run the algorithm will access different sub-buffers' physical addresses.

## Description

### FIELD OF THE INVENTION

The present invention relates to a method to manage physical volatile memory storing sensitive data, especially data relative to a cryptography algorithm process.

### BACKGROUND OF THE INVENTION

More and more powerful side channel attack methods are developed to attack embedded system crypto algorithms to get sensitive information. Such attacks can detect leakage of the data access because most of the case the address of the data is fixed in RAM. Different address value put into the address bus will give different power sign. Then attacker can know which data accessed even if the data itself is masked or randomized. Access to such information may be critical like in the case an attacker accesses to the modulus exponent in RSA. It can leak the bit value of the private exponent.

It is known to use extra RAM to randomize the starting address of the crypto RAM block. Nevertheless the possible location is not so many and it is not possible to extensively use extra RAM for this purpose. Thus, with known solutions, if 32 bytes available, the possibility of one position will be 1/32.

Further alternative and advantageous solutions would, accordingly, be desirable in the art. The present invention aims at avoiding, or at least making more difficult the above-mentioned malicious attacks while maintaining reasonable the quantity of extra RAM required.

### SUMMARY OF THE INVENTION

To hide this kind of leakage, this invention introduces a method to originally randomize the crypto RAM layout.

To this purpose, the invention proposes a method to manage physical volatile memory storing sensitive data relative to a cryptography algorithm process, said method comprising an initial step of defining a plurality of logical sub-buffers ordered in a logical layout intended to include in physical volatile memory sensitive data relative to the cryptography algorithm process, and said method comprising, before each run of the cryptography algorithm process, the following steps:
- constructing a random permutation table for the sub-buffers,
- recording, in an address table, the physical address of each sub-buffer obtained after permutation,
said method then implying the running of the sensitive process by accessing the sub-buffers' contents as ordered in a logical layout using the address table to call the corresponding physical addresses, then each time of run the algorithm will access different sub-buffers' physical addresses.

With the invention, each run of the algorithms makes the physical address of each sub-buffer always change. Thus it will be impossible to get peak signal in DPA/DEMA. This method is also very efficient for reverse engineering because which data had been accessed is randomized. The invention enables to reach high possible physical layout n! where n is the number of sub-buffers. According to the invention, the physical orders of these sub-buffers are dynamically defined to make sure that the order is different at each run of the algorithm. The permutation table and the knowledge of the sub-buffers give successive addresses for each sub-buffer. It means that each sub-buffer is located with an offset from the start address of the RAM dedicated to store sub-buffers.

According to the invention there is no need of physically shuffling data. Only their offsets are stored in the RAM space and used during the running of the algorithm. There is no real data movement because the initial content of the sub-buffers for each cryptography algorithm is not important, they can be any value at the beginning. Algorithms are in fact classically designed in such a way they are not depending on the initial value of buffers which would be unsafe. As sub-buffers are simply permuted, the invention offers the possibility to optimize the occupied memory space that will be occupied during the algorithm running when sub-buffers will be used.

According to the invention, the logical layout of the sub-buffers is defined during the project design, never change after. It will be the base of the following randomization and access macro.

According to the preferred embodiment, said sub-buffers are of different lengths.

This feature contributes to increase the difficulties for an attacker to have access to data as, on a global range, physical addresses for sub-buffers are unpredictable and even, generally, never the same thanks to this feature. In any case, during algorithm running, sub-buffers are accessed as an atomic unit, i.e. as a piece of memory that cannot be separated into smaller sub-buffers, during the cryptography algorithm running and the initial value of these sub-buffers are not important.

According to an advantageous implementation, said method includes a step of defining an offset table from the permutation table and the lengths of the sub-buffers.

This implementation is particularly simple and economic in term of required memory and management of the ordering of the sub-buffers. A specific advantage exists for implementation of the invention with Public Key algorithm like RSA and ECC. With the invention, there is no need to always use the maximum buffer size to support the maximal key length. Thanks to the sub-buffer size table, the buffer size can be initialized each time according to the key size. Much RAM can be saved. For example, in order to support RSA 2048 bits key, there is a need of ten sub-buffers of 256 bytes, the total being 2560 bytes. For many case, the key is only a 1024 bits key. With this invention, by adjusting the sub-buffer size table, it is possible to only use 1280 bytes. Then the RAM usage can be optimized dynamically. According to a particular feature, the random permutation table's size and the address table's size are linearly related to the number of sub-buffers.

This feature means that, for example, if 10 sub-buffers are used, the permutation table needs 10 bytes to permute 0-9. The address table needs 20 bytes if each pointer has 2 bytes which is the most common case for smart card projects. The extra RAM usage for this invention is thus very small comparing to others with same strength of protection. This feature enables to limit the need of additional volatile memory as linear relation is the best algorithm in terms of software complexity and efficiency.

In a particularly advantageous embodiment, the method is implemented using software programmed instructions.

According to this embodiment, the invention is reachable for any kind of crypto system even if the invention is not implemented during the conception of the crypto system. The application of the invention at each run of the algorithm is also rendered possible by introducing code in the algorithm itself. The invention particularly fit to such an application. Extra code is indeed introduced during initialization of the algorithm to initialize the address table. The coding of algorithm itself is identical. Nevertheless as access to sub-buffers now necessitates dynamic access to the address table, the invention adds some code. This will depend on the compiler and on chip structure but in general it is a limited increase. The randomization of the RAM layout is accessed with negligible performance influence on the crypto system. It is especially true for PK where a 0.2-0.5 ms increase is observed for a process of 200+ms.

The invention also pertains to a device using said method, said device being a cryptographic system comprising a physical volatile memory storing sensitive data relative to a cryptography algorithm process, said system comprising memory for storing:
- an initially defined plurality of logical sub-buffers ordered in a logical layout intended to include in physical volatile memory sensitive data relative to the cryptography algorithm process, instructions for constructing, before each run of the cryptography algorithm process, a random permutation table for the sub-buffers,
- the permutation table obtained before each run of the algorithm,
- instructions for, before each run of the cryptography algorithm process, establishing an address table recording the physical address of each sub-buffer obtained by applying the permutation table,
- the address table obtained before each run of the algorithm,
- instructions to run the sensitive process by accessing the sub-buffers' contents as ordered in a logical layout using the address table to call the corresponding physical addresses, then each time of run the algorithm will access different sub-buffers' physical addresses.

With the invention, the attacks are more complex to carry out on a cryptographic system for a malicious attacker.

To the accomplishment of the foregoing and related ends, one embodiment comprising the features of the invention is hereinafter fully described and is particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed.
Figure 1 is a flowchart schematically describing the method of the invention;
Figure 2 illustrates the step of determining the address table according to the invention.

### DETAILED DESCRIPTION OF EMBODIMENTS OF THE INVENTION

In the below detailed description, reference is made to the accompanying drawings that show, by way of illustration, specific embodiments in which the invention may be practiced. These embodiments are described in sufficient detail to enable those skilled in the art to practice the invention. The following detailed description is, therefore, not to be taken in a limiting sense, and the scope of the present invention is defined only by the appended claims, appropriately interpreted, along with the full range of equivalents to which the claims are entitled. At last, the same elements have been designated with the same reference numerals in the different drawings.

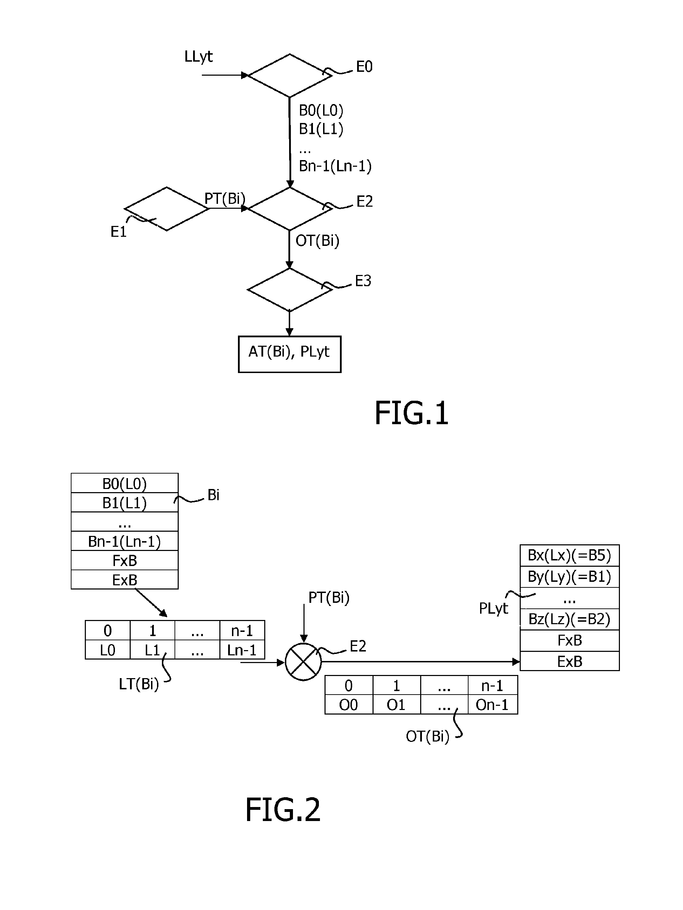

FIG. 1 is a flowchart of the method of the invention.

Normally crypto RAM use one continuous block of RAM, their starting address was fixed for each project. Inside this RAM, each crypto algorithm has its own structure. The invention treats this kind of structure as a set of sub-buffers, indicated as Bi=BO, B1, B2 ... Bn-1, generated in a first initial step E0 from the logical layout of the algorithm LLyt. The logic sub-buffer layout is normally defined during the algorithm implementation design and is not generated dynamically. This step is thus preliminary and occurs once and is never changed after.

In step E1, a random permutation table PT(Bi) is generated.

Such permutation table is of the following kind for, for example, eight sub-buffers:

| | | |
|---|---|---|
| 1 | B0 | 5 |
| 2 | B1 | 2 (y=1) |
| 3 | B2 | 8 (z=2) |
| 4 | B3 | 4 |
| 5 | B4 | 6 |
| 6 | B5 | 1 (x=5) |
| 7 | B6 | 3 |
| 8 | B7 | 7 |

The first column shows the initial ordering of sub-buffers Bi listed in second column, i.e. the designed logical memory layout which is also the physical layout if the invention is not implemented. The starting address of B0 is the base address of the RAM space which will be used by cryptography process. Third column shows one possible ordering that can be observed in physical memory during a running of the algorithm. The permutation table PT(Bi) is the source for randomization according to the invention.

A next step E2 determines offsets of each sub-buffers Bi in the RAM space from the permutation table PT(Bi) and the length definition of the sub-buffers LT(Bi). This step E2 is more particularly illustrated on figure 2.

The quality of permutation has to be guaranteed. A table of lengths LT(Bi) of each sub-buffers Bi should be determined from the list of sub-buffers Bi and fix value stored in NVM or ROM, this fixed length value was defined according the requirement, i.e. the maximum key or message length should be supported. For PK case, as seen above, an initialization function gives the key length. The sub-buffers LT(Bi) have advantageously their localization in RAM, the used memory space being adjusted according to the real key length. Physical RAM usage will be thus saved. This enables to use real needed buffer size instead of always use the max buffer size which is only used to support max key length. The invention particularly applies to use cases of PK where key size smaller that the max key length is used.

To determine the physical address of each sub-buffers Bi resulting from the permutation, an offset Oi of the physical address is advantageously calculated for each sub-buffer. The address determination is particularly critical when, according to the preferred embodiment of the invention, sub-buffers Bi are of different lengths. The step E2 has two inputs: the permutation table PT(Bi) and the table LT(Bi) of the lengths of the sub-buffers.

Randomized offsets Oi=O0, 01...On-1 are determined for each sub-buffer Bi based on the permutation table. It constitutes for instance an offset table OT(Bi). It enables to get a new ordered address table AT(Bi) by adding the base address of the RAM space in step E3.

The step E3 results in the reordered physical address of each sub-buffers i.e. the physical RAM layout PLyt. It also results in the construction of an address table AT(Bi).

Then the algorithm is run. It uses a macro calling the address table AT(Bi) to access the sub-buffers Bi by on-the-fly calculation.

Thus the invention enables to randomize the order of the sub-buffers each time the algorithm is run. The order of used sub-buffers is thus different from one run to the other.

In a variant, the offset table OT(Bi) constitutes the address table AT(Bi). It is indeed equivalent in term of use of a besides established address table. In this case, for accessing the sub-buffers, the exact offset in the whole crypto RAM block, randomized during each run of the algorithm, is calculated on-the-fly by using the pre-computed offset including the offset of each sub-buffer.

Below is presented a pseudo code of generating offset table:

```
       Input: Array PT(Bi) as temp buffer
                   Array LT(Bi) defined length of each sub-buffers
      Output:      Array OT(Bi) contain the offset of each sub-buffer
       PT = {0,1,...,n-1};
      Table Permutation (PT); the order in permutation PT is randomized
      Offset = 0;
       For (i = 0; i < n; i++)
      {
             OT[PT(Bi)] = Offset;
             Offset += LT[PT[Bi]];
      }
```

Then the access can be done by some macro like:

```
#define ACCESS_80 (BYTE*)(cryptoRAMStartingAddress +
 
OT(B0))
```

According to the invention, the possibility of one layout can be calculated as P = 1/n! (n is the number of sub-buffers) which is much better than 1/n (n is the size of extra RAM used) as described in the prior art alternative way, pre-consumption being the permutation of number 0..n-1 giving real random result.

The invention results in an improved security for RAM variable address leakage, with acceptable size increase and performance decrease. The invention is very efficient for counter side channel analysis and reverse engineering.

## Claims

1. Method to manage physical volatile memory storing sensitive data relative to a cryptography algorithm process, said method comprising an initial step (E0) of defining a plurality of logical sub-buffers (Bi) ordered in a logical layout (LLyt) intended to include in physical volatile memory sensitive data relative to the cryptography algorithm process, and said method comprising, before each run of the cryptography algorithm process, the following steps:
- constructing (E1) a random permutation table (PT(Bi)) for the sub-buffers (Bi),
- recording (E3), in an address table (AT(Bi)), the physical address of each sub-buffer (Bi) obtained after permutation,
said method then implying the running of the sensitive process by accessing the sub-buffers' contents as ordered in a logical layout (LLyt) using the address table (AT(Bi)) to call the corresponding physical addresses, then each time of run the algorithm will access different sub-buffers' physical addresses.

2. Method according to claim 1, wherein said sub-buffers (Bi) are of different lengths (Li).

3. Method according to claim 2, wherein said method includes a step (E2) of defining an offset table (OT(Bi)) from the permutation table PT(Bi) and the lengths of the sub-buffers (Li).

4. Method according to one of the preceding claims, wherein the random permutation table's (PT(Bi)) size and the address table's (AT(Bi)) size are linearly related to the number of sub-buffers (Bi) .

5. Method according to one of the preceding claims, wherein the method is implemented using software programmed instructions.

6. Cryptographic system comprising a physical volatile memory storing sensitive data relative to a cryptography algorithm process, said system comprising memory for storing:
- an initially defined plurality of logical sub-buffers (Bi) ordered in a logical layout (LLyt) intended to include in physical volatile memory sensitive data relative to the cryptography algorithm process,
- instructions for constructing, before each run of the cryptography algorithm process, a random permutation table (PT(Bi)) for the sub-buffers (Bi),
- the permutation table (PT(Bi)) obtained before each run of the algorithm,
- instructions for, before each run of the cryptography algorithm process, establishing an address table (AT(Bi)) recording the physical address of each sub-buffer (Bi) obtained by applying the permutation table (PT(Bi)),
- the address table (AT(Bi)) obtained before each run of the algorithm,
- instructions to run the sensitive process by accessing the sub-buffers' contents as ordered in a logical layout (LLyt) using the address table (AT(Bi)) to call the corresponding physical addresses, then each time of run the algorithm will access different sub-buffers' physical addresses.
